(19) Europäisches Patentamt
European Patent Office
Office européen des brevets

(11) EP 4 712 652 A1

(12) **EUROPEAN PATENT APPLICATION**
published in accordance with Art. 153(4) EPC

(43) Date of publication:
**18.03.2026 Bulletin 2026/12**

(21) Application number: **23935969.8**

(22) Date of filing: **06.05.2023**

(51) International Patent Classification (IPC):
***H04W 72/231*** *(2023.01)*

(52) Cooperative Patent Classification (CPC):
**H04B 7/024; H04W 48/20; H04W 72/231**

(86) International application number:
**PCT/CN2023/092622**

(87) International publication number:
**WO 2024/229640 (14.11.2024 Gazette 2024/46)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **Beijing Xiaomi Mobile Software Co., Ltd.**
**Beijing 100085 (CN)**

(72) Inventor: **ZHAO, Qun**
**Beijing 100085 (CN)**

(74) Representative: **Dehns Germany Partnerschaft mbB**
**Theresienstraße 6-8**
**80333 München (DE)**

(54) **TRP SELECTION METHOD AND APPARATUS, AND COMMUNICATION DEVICE, COMMUNICATION SYSTEM AND STORAGE MEDIUM**

(57) Provided in the embodiments of the present disclosure are a TRP selection method and apparatus, and communication device, a communication system and a storage medium. The TRP selection method is executed by a UE, and comprises: determining a first CTDSIF of at least one first TRP, wherein the first CTDSIF is a CTDSIF of a first channel, which is a channel from the first TRP to the UE; acquiring a first threshold, wherein the first threshold is used for indicating a threshold of the CTDSIF; and on the basis of the first CTDSIF and the first threshold, determining whether to select the first TRP as a third TRP.

S41: determining a first CTDSIF for at least one first TRP, wherein the first CTDSIF is a CTDSIF of a first channel, and the first channel is a channel from the first TRP to the UE

↓

S42: acquiring a first threshold, wherein the first threshold is configured to indicate a threshold for a CTDSIF

↓

S43: determining whether to select the first TRP as a third TRP based on the first CTDSIF and the first threshold

FIG. 4

EP 4 712 652 A1

## Description

## TECHNICAL FIELD

The present disclosure relates to, but is not limited to, the field of wireless communication technology, and in particular, to a method and device for selecting a TRP, a communication device, a communication system and a storage medium.

## BACKGROUND

A multi-antenna technology, i.e., multiple input multiple output technology, is introduced in the field of wireless communication technology. The performance of MIMO technology is highly dependent on channel state information (CSI). Coherent joint transmission (CJT) is a distributed MIMO system between transmission reception points (TRPs), belongs to an extension of MIMO technology, and is also highly dependent on the precision of CSI.

With comparison to single-TRP transmission, a CJT equivalent channel (i.e., CJT composite channel) of a plurality of TRSs has a broader Doppler power spectrum. Currently, one or more candidate TRPs may be selected to join a serving TRP for CJT transmission. However, selecting an unsuitable candidate TRP may cause the CJT equivalent channel to change very rapidly, rendering it highly sensitive to CSI aging.

## SUMMARY

Embodiments of the present disclosure provide a method and device for selecting a TRP, a communication device, and a storage medium.

A first aspect of embodiments of the present disclosure provides a method for selecting a transmission reception point (TRP) performed by a user equipment (UE), including:

determining a first channel time-domain selectivity increasement factor (CTDSIF) for at least one first TRP, wherein the first CTDSIF is a CTDSIF of a first channel, and the first channel is a channel from the first TRP to the UE;
acquiring a first threshold, wherein the first threshold is configured to indicate a threshold for a CTDSIF; and
determining whether to select the first TRP as a third TRP based on the first CTDSIF and the first threshold.

In some embodiments, determining whether to select the first TRP as the third TRP based on the first CTDSIF and the first threshold includes at least one of:

determining not to select the first TRP corresponding to the first CTDSIF as the third TRP based on the first CTDSIF being greater than the first threshold; or
determining to select the first TRP corresponding to the first CTDSIF as the third TRP based on the first CTDSIF being less than or equal to the first threshold.

In some embodiments, acquiring the first threshold includes:

receiving the first threshold sent by a network device; or
acquiring the first threshold specified by a protocol.

In some embodiments, receiving the first threshold sent by the network device includes:

receiving a radio resource control (RRC) signaling sent by the network device, wherein the RRC signaling carries the first threshold; or
receiving a media access control control element (MAC CE) signaling sent by the network device, wherein the MAC CE signaling carries the first threshold.

In some embodiments, the first threshold is determined based on at least one of:

a maximum Doppler shift of the UE;
a carrier frequency corresponding to a second TRP;
a first time interval corresponding to the second TRP, wherein the first time interval is an interval between a reporting time of CSI and a time when a PDSCH is transmitted using the CSI;
a second time interval corresponding to the second TRP, wherein the second time interval is determined based on a plurality of first time intervals; or
a load of the network device or a base station.

In some embodiments, the first CTDSIF is determined based on a Doppler-domain bandwidth increasement factor or a normalized Doppler offset factor;

wherein the Doppler-domain bandwidth increasement factor is determined based on a first bandwidth and a second bandwidth, the first bandwidth is determined by a Doppler-domain bandwidth of a composite channel of the first channel and a second channel, the second channel is a channel from a second TRP to the UE, and the second bandwidth is a Doppler-domain bandwidth of the second channel; and
the normalized Doppler offset factor is determined based on a first frequency and a second frequency, the first frequency is a maximum Doppler shift, and the second frequency is a power weighting value of a Doppler frequency of the composite channel of the first channel and the second channel.

In some embodiments, the Doppler-domain bandwidth increasement factor is a ratio of a first numerical value to the second bandwidth, and the first numerical value is a difference between the first bandwidth and the second bandwidth.
In some embodiments, the normalized Doppler offset factor is a ratio of an absolute value of the second frequency to the first frequency.
In some embodiments, the first TRP satisfies at least one of:

reference signal received power (RSRP) of the first TRP being greater than a RSRP threshold; or
the first TRP belonging to a same TRP cluster as the second TRP.

In some embodiments, the RSRP threshold is configured by a network device, or is specified by a protocol.
In some embodiments, the UE is a UE accessing the second TRP, and having a coherent joint transmission (CJT) capability.
A second aspect of embodiments of the present disclosure provides a method for selecting a TRP performed by a network device, including:
sending a first threshold to at least one UE, wherein the first threshold is a threshold for a CTDSIF.
In some embodiments, the method further includes:
determining the first threshold for at least one second TRP with respect to the at least one UE.
In some embodiments, sending the first threshold to the at least one UE includes:

sending an RRC signaling to the at least one UE, wherein the RRC signaling carries the first threshold; or
sending an MAC CE signaling to the at least one UE, wherein the MAC CE signaling carries the first threshold.

In some embodiments, the first threshold is determined based on at least one of:

a maximum Doppler shift of the UE;
a carrier frequency corresponding to a second TRP;
a first time interval corresponding to the second TRP, wherein the first time interval is an interval between a reporting time of CSI and a time when a PDSCH is transmitted using the CSI;
a second time interval corresponding to the second TRP, wherein the second time interval is determined based on a plurality of first time intervals; or
a load of the network device or a base station.

In some embodiments, the UE is a UE accessing the second TRP, and having a coherent joint transmission (CJT) capability.
A third aspect of embodiments of the present disclosure provides a device for selecting a TRP configured in a UE, including:

a first processing module, configured to determine a first CTDSIF for at least one first TRP, wherein the first CTDSIF is a CTDSIF of a first channel, and the first channel is a channel from a first TRP to the UE; and
a receiving module, configured to acquire a first threshold, wherein the first threshold is configured to indicate a threshold for a CTDSIF,
the first processing module is configured to determine whether to select the first TRP as a third TRP based on the first CTDSIF and the first threshold.

In some embodiments, the first processing module is configured to determine not to select the first TRP corresponding to the first CTDSIF as the third TRP based on the first CTDSIF being greater than the first threshold; or the first processing module is configured to determine to select the first TRP corresponding to the first CTDSIF as the third TRP based on the first CTDSIF being less than or equal to the first threshold.

In some embodiments, the receiving module is configured to receive the first threshold sent by a network device or acquire the first threshold specified by a protocol.

In some embodiments, the receiving module is configured to receive a RRC signaling sent by the network device, wherein the RRC signaling carries the first threshold; or

the receiving module is configured to receive an MAC CE signaling sent by the network device, wherein the MAC CE signaling carries the first threshold.

In some embodiments, the first threshold is determined based on at least one of:

a maximum Doppler shift of the UE;
a carrier frequency corresponding to a second TRP;
a first time interval corresponding to the second TRP, wherein the first time interval is an interval between a reporting time of CSI and a time when a PDSCH is transmitted using the CSI;
a second time interval corresponding to the second TRP, wherein the second time interval is determined based on a plurality of first time intervals; or
a load of the network device or a base station.

In some embodiments, the first CTDSIF is determined based on a Doppler-domain bandwidth increasement factor or a normalized Doppler offset factor;

wherein the Doppler-domain bandwidth increasement factor is determined based on a first bandwidth and a second bandwidth, the first bandwidth is determined by a Doppler-domain bandwidth of a composite channel of the first channel and a second channel, the second channel is a channel from a second TRP to the UE, and the second bandwidth is a Doppler-domain bandwidth of the second channel; and
the normalized Doppler offset factor is determined based on a first frequency and a second frequency, the first frequency is a maximum Doppler shift, and the second frequency is a power weighting value of a Doppler frequency of the composite channel of the first channel and the second channel.

In some embodiments, the Doppler-domain bandwidth increasement factor is a ratio of a first numerical value to the second bandwidth, and the first numerical value is a difference between the first bandwidth and the second bandwidth.

In some embodiments, the normalized Doppler offset factor is a ratio of an absolute value of the second frequency to the first frequency.

In some embodiments, the first TRP satisfies at least one of:

RSRP of the first TRP being greater than a RSRP threshold; or
the first TRP belonging to a same TRP cluster as the second TRP.

In some embodiments, the RSRP threshold is configured by a network device, or is specified by a protocol.

In some embodiments, the UE is a UE accessing the second TRP, and having a coherent joint transmission (CJT) capability.

A fourth aspect of embodiments of the present disclosure provides a device for selecting a TRP configured in a network device, including:

a sending module, configured to send a first threshold to at least one UE, wherein the first threshold is a threshold for a CTDSIF.

In some embodiments, the device further includes a second processing module, configured to determine the first threshold for at least one second TRP with respect to the at least one UE.

In some embodiments, the sending module is configured to send an RRC signaling to the at least one UE, wherein the RRC signaling carries the first threshold; or

the sending module is configured to send an MAC CE signaling to the at least one UE, wherein the MAC CE signaling carries the first threshold.

In some embodiments, the first threshold is determined based on at least one of:

a maximum Doppler shift of the UE;
a carrier frequency corresponding to a second TRP;
a first time interval corresponding to the second TRP, wherein the first time interval is an interval between a reporting time of CSI and a time when a PDSCH is transmitted using the CSI;
a second time interval corresponding to the second TRP, wherein the second time interval is determined based on a plurality of first time intervals; or
a load of the network device or a base station.

In some embodiments, the UE is a UE accessing the second TRP, and having a coherent joint transmission (CJT) capability.

A fifth aspect of embodiments of the present disclosure provides a communication system including a UE and a network device, wherein

the network device is configured to send a first threshold to at least one UE, wherein the first threshold is configured to indicate a threshold for a second channel time-domain selectivity increasement factor (CTDSIF),
the UE is configured to determine a first CTDSIF for at least one first TRP, wherein the first CTDSIF is a CTDSIF of a first channel, and the first channel is a channel from the first TRP to the UE, and
the UE is further configured to determine whether to select the first TRP as a third TRP based on the first CTDSIF and the first threshold.

A sixth aspect of embodiments of the present disclosure provides a communication device including a processor; a transceiver; a memory; and an executable program stored on the memory and capable of being executed by the processor, wherein the processor, when executing the executable program, performs the method for selecting a TRP provided by the above first or second aspect.

A seventh aspect of embodiments of the present disclosure provides a computer storage medium having a computer-executable program stored thereon that, when executed by a processor, can implement the method for selecting a TRP provided by the first or second aspect.

The technical solutions provided by the embodiments of the present disclosure may bring the following beneficial effects.

In the embodiments of the present disclosure, the UE may determine a first CTDSIF for at least one first TRP and acquire a first threshold for a CTDSIF, and may determine whether to select the first TRP as a third TRP based on the first CTDSIF and the first threshold. This can select an appropriate first TRP as the third TRP for joint transmission with a second TRP in consideration of a time-domain change in an equivalent channel during the coherent joint transmission of a plurality of TRPs, that is, selecting an appropriate candidate TRP as a cooperating TRP for joint transmission with a serving TRP, thereby reducing a case of CSI aging.

It should be understood that in the technical solutions provided in the embodiments of the present disclosure, the above general descriptions and the following detailed descriptions are merely illustrative and explanatory and are not intended to limit the embodiments of the present disclosure.

## BRIEF DESCRIPTION OF THE DRAWINGS

The accompanying drawings herein are incorporated into and form part of the specification, illustrate embodiments of the present disclosure, and serve, together with the description, to explain the principle of the embodiments of the present disclosure.

FIG. 1 is a schematic diagram of a structure of a wireless communication system according to an exemplary embodiment.
FIG. 2 is a schematic diagram of a CJT scenario according to an exemplary embodiment.
FIG. 3 is a schematic diagram of a Doppler power spectrum according to an exemplary embodiment.
FIG. 4 is a flowchart of a method for selecting a TRP according to an exemplary embodiment.
FIG. 5 is a schematic diagram of a first bandwidth and a second bandwidth in a CJT scenario according to an exemplary embodiment.
FIG. 6 is a schematic diagram of a first component set and a second component set in a CJT scenario according to an exemplary embodiment.
FIG. 7 is a flowchart of a method for selecting a TRP according to an exemplary embodiment.
FIG. 8 is a flowchart of a method for selecting a TRP according to an exemplary embodiment.
FIG. 9 is a structural diagram of a device for selecting a TRP according to an exemplary embodiment.
FIG. 10 is a structural diagram of a device for selecting a TRP according to an exemplary embodiment.
FIG. 11 is a structural diagram of a UE according to an exemplary embodiment.
FIG. 12 is a structural diagram of a communication device according to an exemplary embodiment.

## DETAILED DESCRIPTION

Exemplary embodiments are described herein in detail, examples of which are represented in the accompanying drawings. When the following description relates to the accompanying drawings, the same numerals in the different figures indicate the same or similar elements unless otherwise indicated. The implementations described in the following exemplary embodiments do not represent all implementations consistent with the embodiments of the present disclosure. Rather, they are only examples of devices and methods consistent with some aspects of embodiments of the present disclosure.

The term used in the embodiments of the present disclosure is used solely for describing particular embodiments and is not intended to limit the embodiments of the present disclosure. The singular forms such as "a", "an", "this", "the above", "the foregoing" and "such a/an" in the embodiments of the present disclosure are also intended to encompass the plural forms, unless clearly indicated otherwise in the context. It is to be also understood that the term "and/or" as used herein refers to and encompasses any or all possible combinations of one or more of the associated listed items. In the embodiments of the present disclosure, "a plurality" denotes two or more. The prefixes such as "first", "second" or the like in the embodiments of the present disclosure serve solely to distinguish different described subjects and do not impose any limitations on positions, sequences, priorities, quantities, or contents of the described subjects. The statements on the described subjects may refer to the contexts in the claims or embodiments, and the prefixes shall not be regarded as constituting redundant limitations. For example, the terms first, second, third, etc. may be used to describe various information, such information should not be limited to these terms. These terms are only used to distinguish the same type of information from one another. For example, without departing from the scope of the embodiments of the present disclosure, first information may also be referred to as second information, and similarly, the second information may be referred to as the first information as well. Depending on the context, the word "if" as used herein may be interpreted as "at the time of ......" or "when ......" or "in response to determining". The name of information or the like is not limited to the name recited in the embodiments, and the terms such as "information", "message", "signaling", "report", "instruction", "configuration" and "data" may be used interchangeably.

In some embodiments of the present disclosure, the terms "acquire", "obtain", "get", "receive", "transmit (send and/or receive)" are interchangeable and may be interpreted as receiving from another entity, acquiring from a protocol, deriving through self-processing, or other meanings.

In some embodiments of the present disclosure, the terms "send", "report", "issue", "transmit (send and/or receive)" are interchangeable.

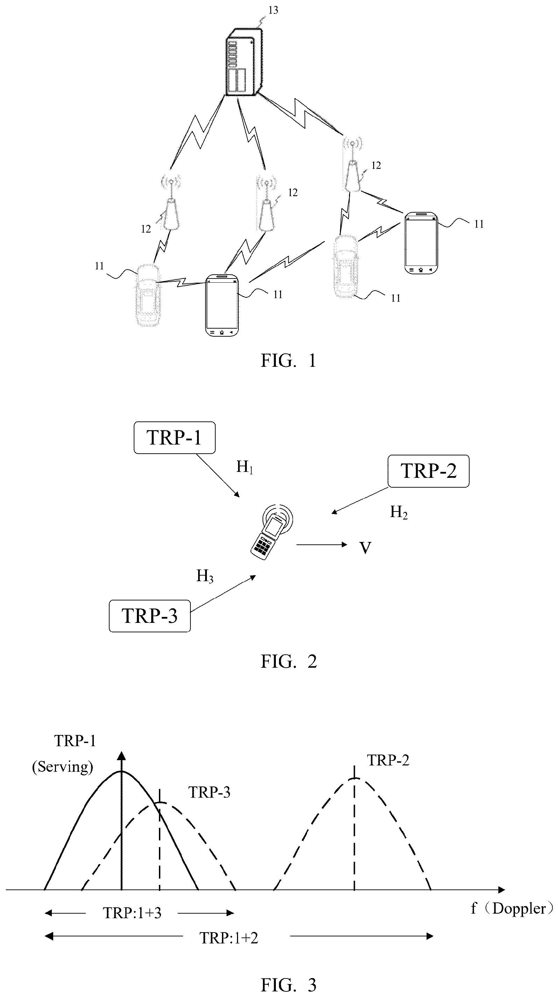

Referring to FIG. 1, a diagram of a structure of a wireless communication system according to an embodiment of the present disclosure is illustrated. As shown in FIG. 1, the wireless communication system is a communication system based on a cellular mobile communication technology, which may include several UEs 11 and several access devices 12.

The UE 11 may be a device that provides voice and/or data connectivity to a user. The UE 11 may communicate with one or more core networks via a radio access network (RAN). The UE 11 may be an IoT UE, such as sensor device, mobile phone (or "cellular" phone), and computer with a IoT UE, which may be, for example, fixed, portable, pocket-sized, handheld, computer-integrated, or vehicle-mounted device, for example, a station (STA), a subscriber unit, a subscriber station, a mobile station, a mobile, a remote station, an access point, a remote terminal, an access terminal, a user terminal, a user agent, or a user equipment (UE). Alternatively, the UE 11 may be an unmanned aerial vehicle device. Alternatively, the UE 11 may be an in-vehicle device, e.g., it may be a trip computer with a wireless communication capability, or a wireless communication device externally connected to a trip computer. Alternatively, the UE 11 may be a roadside device, e.g., it may be a street light, a signal light, or other roadside devices having a wireless communication capability.

The access device 12 may be a network-side device in the wireless communication system. The wireless communication system may be the $4^{th}$ generation mobile communication (4G) system, also known as a long term evolution (LTE) system, or may be a 5G system, also known as a new radio (NR) system or 5G NR system. Alternatively, the wireless communication system may be a next generation system of the 5G system. The access network in the 5G system may be called new generation-radio access network (NG-RAN). Alternatively, it may be a MTC system.

The access device 12 may be an evolved access device (eNB) used in the 4G system. Alternatively, the access device 12 may be an access device (gNB) of a centralized distributed architecture used in the 5G system. When the access device 12 uses the centralized distributed architecture, it typically includes a central unit (CU) and at least two distributed units (DUs). The central unit is provided with a protocol stack of packet data convergence protocol (PDCP) layer, radio link control (RLC) layer, and media access control (MAC) layer, and the distributed unit is provided with a protocol stack of physical (PHY) layer. The specific implementation of the access device 12 is not limited in the embodiments of the present disclosure.

A wireless connection may be established between the access device 12 and the UE 11 via a wireless radio. In various implementations, the wireless radio is a wireless radio based on the $4^{th}$ generation mobile communication network technology (4G) standard; alternatively, the wireless radio is a wireless radio based on the $5^{th}$ generation mobile communication network technology (5G) standard, for example, the wireless radio is the new radio; alternatively, the wireless radio may also be a wireless radio based on a next generation mobile communication network technology standard of the 5G.

In some embodiments, the wireless communication system described above may further include a core network element 13.

Several access network elements 12 are respectively connected to the core network element 13. The core network element 13 may be a core network device in the wireless communication system. For example, the core network element 13 may be a Mobility Management Entity (MME) within an Evolved Packet Core (EPC). Alternatively, the core network device may be another core network device, such as Serving Gateway (SGW), Public Data Network Gateway (PGW), Policy and Charging Rules Function (PCRF), or Home Subscriber Server (HSS). Alternatively, the core network element 13 may also be a core network device within a 5G system, such as Policy Control Function (PCF), Session Management Function (SMF), Access and Mobility Management Function (AMF), Unified Data Management (UDM), User Plane Function (UPF) or the like. The implementation form of core network element 13 is not limited in the embodiments of the present disclosure.

In some embodiments, a coherent detection may be employed for a MIMO link. A receiver end may perform a channel estimation based on a reference signal sent, such as demodulation reference signal (DMRS), thereby obtaining accurate CSI.

In some embodiments, a transmitter may not directly acquire CSI. Consequently, how the transmitter acquires CSI remains a research focus. For a time division duplex (TDD) system, the receiver may send the reference signal such as sounding reference signal (SRS). The transmitter then estimates a channel from the receiver to the transmitter based on this signal, and based on channel reciprocity, derives the channel from the transmitter to the receiver. For a frequency division duplex (FDD) system, the transmitter sends a reference signal for acquiring CSI, such as channel state information reference signal (CSI-RS). The receiver measures this signal, calculates the CSI, and reports the same to the transmitter. Upon obtaining accurate CSI, the transmitter may perform spatial-temporal processing on the data to be sent (e.g., PDSCH) to achieve better channel matching. However, in both TDD and FDD systems, there is always a time difference between the calculation of CSI and the utilization thereof. Given that the channel has a time-domain selectivity, the CSI obtained by the transmitter only matches the channel state at the time the reference signal (e.g., SRS in TDD or CSI-RS in FDD) is sent, however does not match the channel state at the time a data signal (e.g., PDSCH) is sent. This phenomenon is known as CSI aging. According to the Wiener-Khinchin theorem, the time selectivity of a channel is determined by the Doppler power spectrum thereof. Specifically, the time-domain correlation coefficient of the channel is the Fourier transform of the Doppler power spectrum. If the Doppler power spectrum of the channel is relatively wide, it indicates that the channel has a strong time selectivity, i.e., the channel changes rapidly, leading to a more severe CSI aging, which may significantly reduce the channel capacity of the MIMO link. If the Doppler power spectrum of the channel is relatively narrow, it indicates that the channel has a weak time selectivity, i.e., the channel changes slowly, leading to a less severe CSI aging, which may have a limited impact on the channel capacity of the MIMO link.

In some embodiments, in a cellular communication system, the throughput of cell-edge users has consistently been a bottleneck for the entire cellular network. The CJT may convert inter-cell interference into a useful signal, thereby substantially enhancing the signal-to-interference-and-noise power ratio (SINR) and user throughput, particularly for the cell-edge users. Actually, the CJT is a distributed MIMO system between TRPs, belongs to an extension of MIMO technology, and is also highly dependent on the precision of CSI. With comparison to single-TRP transmission, a CJT equivalent channel (i.e., CJT composite channel) from a plurality of TRSs to a UE has a broader Doppler power spectrum. Consequently, with comparison to the single-TRP channel, the CJT equivalent channel has a rapider channel change and a more severe CSI aging issue.

In some embodiments, during the selection of TRP, in addition to a serving TRP, the UE may select one or more TRPs as cooperating TRPs to joint the serving UE for CJT transmission. For example, the UE may measure RSRPs of all candidate TRPs (where each candidate TRP belongs to the same TRP cluster as the serving TRP of the UE), then select one or more candidate TRPs with the highest RSRP (excluding the serving TRP) as the cooperating TRPs of the UE; or select one or more candidate TRPs where the difference between their RSRPs and the RSRP of the serving TRP is less than a specified threshold as the cooperating TRPs of the UE.

In some embodiments, when selecting a cooperating TRP, the CJT UE considers only signal strength information (e.g., a magnitude of RSRP) of a candidate TRP, without considering the time selectivity of the CJT equivalent channel. In such cases, if the selected cooperating TRP results in a relatively wide Doppler power spectrum for the CJT channel, the CJT transmission involving that cooperating TRP may suffer from a very severe CSI aging issue, inevitably leading to a significant degradation in CJT performance.

As illustrated in FIG. 2, a CJT UE travels to the right at velocity v. TRP-1 is a serving TRP of the CJT UE, and TRP-2 and TRP-3 are candidate cooperating TRPs of the CJT UE. This CJT UE is a UE with CJT capability, and the UE with CJT capability refers to a UE that can perform joint transmission via a plurality of TRPs. A downlink channel impulse response (CIR) from TRP-i to UE can be expressed as

$H_i(\tau) = \sum_n \sum_m c_{i,n,m}\, \alpha_r(\theta_{i,n,m}) \alpha_t^H(\phi_{i,n,m}) \delta(\tau - \tau_n), i = 1,2,3$ , where $c_{i,n,m}$, $\theta_{i,n,m}$ and $\phi_{i,n,m}$ denote complex fading coefficient, angle of arrival, and angle of departure respectively for the $m^{th}$ ray within the $n^{th}$ cluster of CIR, i.e., $H_i(\tau)$, from TRP-i to UE; and $\alpha_r(\cdot)$ and $\alpha_\tau(\cdot)$ denote array responses at a receiver (UE side) and transmitter (TRP side), respectively. The UE may perform synchronization based on a synchronization signal such as tracking reference signal (TRS) from the serving TRP (TRP-1) of the UE. Therefore, as illustrated in FIG. 3, the Doppler power spectrum component of $H_i(\tau)$ is distributed near zero frequency, while the Doppler power spectra of $H_2(\tau)$ and $H_3(\tau)$ are distributed at relatively high frequencies, the locations of which specifically depend on the angle between the arrival directions of waves from TRP-2 and TRP-3 and the movement velocity v of the UE.

In the method for selecting the TRP in the above embodiment, the UE selects TRP-2 as its cooperating TRP because the RSRP from TRP-2 measured by the UE is higher, or the signal from TRP-2 is stronger. However, the Doppler spectrum of the equivalent channel of CJT in which TRP-1 and TRP-2 are selected is very wide. In other words, the equivalent channel of CJT in which TRP-1 and TRP-2 are selected changes very rapidly and is highly sensitive to CSI aging. Consequently, this leads to very poor final CJT performance.

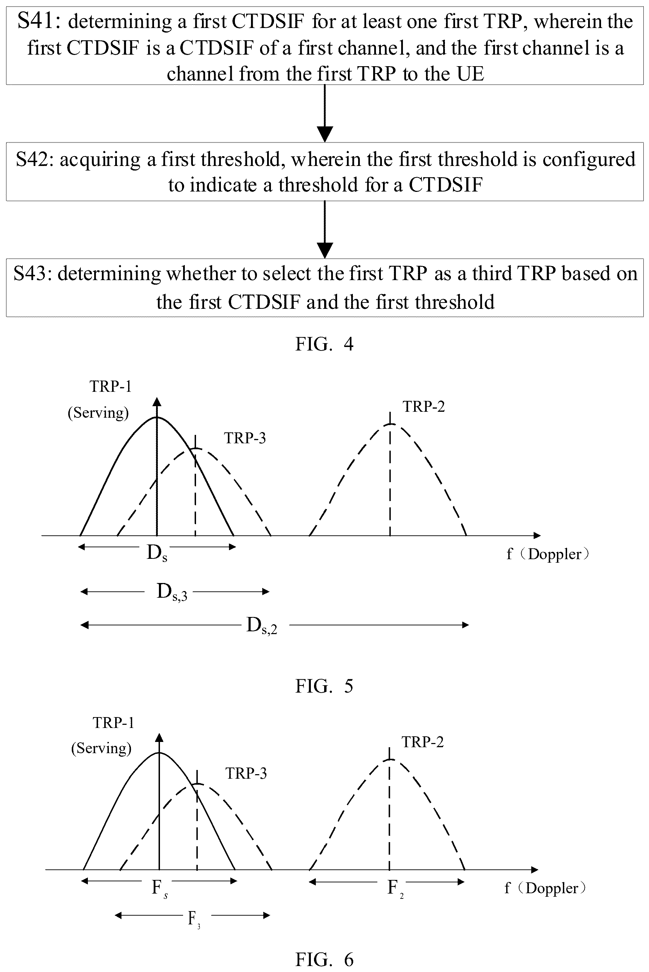

As illustrated in FIG. 4, an embodiment of the present disclosure provides a method for selecting a TRP. The method is performed by a UE and includes:

step S41, determining a first CTDSIF for at least one first TRP, wherein the first CTDSIF is a CTDSIF of a first channel, and the first channel is a channel from the first TRP to the UE;
step S42, acquiring a first threshold, wherein the first threshold is configured to indicate a threshold for a CTDSIF; and
step S43, determining whether to select the first TRP as a third TRP based on the first CTDSIF and the first threshold.

In some embodiments, the threshold for the CTDSIF broadly refers to a threshold for all CTDSIFs, instead of specifically referring to the threshold for a specific CTDSIF.

In some embodiments, the UE may be any mobile terminal or fixed terminal, etc. For example, the UE may be at least one of a mobile phone, a computer, a server, a wearable device, a gaming control platform, a roadside device, an in-vehicle device, a multimedia device, or an industrial device. For another example, the UE may be at least one of an eMBB terminal, a reduced capability UE, a Redcap terminal, and an extended Redcap (eRedcap) terminal.

In some embodiments, the UE is a UE accessing a second TRP and having a coherent joint transmission (CJT) capability.

In some embodiments, step S42 of acquiring the first threshold includes: receiving the first threshold sent by a network device. Optionally, the network device includes an access network device, and the access network device may be a logical node or function flexibly deployed within the access network. Optionally, the network device may include a base station.

In some embodiments, step S42 of acquiring the first threshold includes: acquiring the first threshold specified by a protocol. Optionally, the protocol may include a communication protocol, or a protocol negotiated between the UE and the network device.

In some embodiments, the base station may include at least one of a 3G base station, a 4G base station, a 5G base station, or other evolved base stations.

In some embodiments, "at least one" denotes "one or more", and "a plurality of' denotes "two or more".

In some embodiments, the first TRP is a candidate TRP, and/or the second TRP is a serving TRP, and/or the third TRP is a cooperating TRP.

In some embodiments, the first TRP satisfies at least one of: RSRP of the first TRP being greater than a RSRP threshold; or the first TRP belonging to a same TRP cluster as the second TRP.

Optionally, the RSRP threshold is configured by the network device, or is specified by a protocol. For example, the UE receives the RSRP threshold sent by the network device. For example, the UE and the network device may specify the RSRP threshold, or a wireless communication protocol may specify the RSRP threshold. Thus, the RSRP threshold may be determined through a plurality of manners to accommodate a wider range of application scenarios.

Optionally, the first TRP and the second TRP may belong to the same base station within the network topology. Alternatively, the first TRP and second TRP may be managed by the same central control node within the network topology.

In an embodiment of the present disclosure, it may also take into account of the RSRP of TRP and/or whether the TRP is within the same cluster as the second TRP to select the first TRP, i.e., selecting a candidate TRP, which considers that the TRP with relatively stronger signal strength or relatively stronger association with the serving TRP (i.e., the second TRP) as the candidate TRP (the first TRP). Consequently, based on this candidate TRP, a more suitable serving TRP (i.e., the third TRP) may be selected for the serving TRP.

In some embodiments, both the first CTDSIF and the CTDSIF may represent a strength of the time selectivity of the channel.

In some embodiments, both the first CTDSIF and the CTDSIF may represent a rate of the channel change in time, i.e., the rate at which a complex coefficient (including amplitude and phase) of the channel changes over time (also known as fading). For example, if the time selectivity of the channel is relatively strong, the channel changes relatively rapidly over time; alternatively, if the time selectivity of the channel is relatively weak, the channel changes relatively slowly over time.

Optionally, the strength of the time selectivity of the channel may be determined by the Doppler power spectrum of the channel. For example, if the Doppler power spectrum of the channel is relatively wide, the channel has a relatively strong time selectivity; alternatively, if the Doppler power spectrum of the channel is relatively narrow, the channel has a relatively weak time selectivity. That is, the strength of time selectivity of the channel is positively correlated with the width of the Doppler power spectrum.

Optionally, the strength of time selectivity of the channel may be characterized by a time-domain correlation coefficient. For example, the time-domain correlation coefficient of the channel at a first time and a second time is referred to as a first correlation coefficient. If the first correlation coefficient is relatively small, the time selectivity of the channel is relatively weak; alternatively, if the first correlation coefficient is relatively large, the time selectivity of the channel is relatively strong. That is, the strength of the time selectivity of the channel is positively correlated with the magnitude of the time-domain correlation coefficient of the channel at two given times.

Optionally, the time-domain correlation coefficient may be the Fourier transform of the Doppler power spectrum. In other embodiments, the time-domain correlation coefficient may be any physical quantity indicating the rate of the channel change in time, which is limited herein, and such change may include, but is not limited to, the Doppler power spectrum.

Optionally, when the CTDSIF is the first CTDSIF, the first CTDSIF is used to represent a ratio of the strength of the time selectivity of the first channel and the second channel as a composite channel to the strength of the time selectivity of the second channel.

In some embodiments, the names "first CTDSIF" and "CTDSIF" may be not limited. For example, the first CTDSIF and the CTDSIF may respectively be a first parameter and a second parameter; for another example, each of the first CTDSIF and the CTDSIF may be a time-domain parameter; and so forth.

In some embodiments, the first threshold may be a threshold for CTDSIF, or a threshold value for CTDSIF.

In some embodiments, the first threshold is the threshold for the CTDSIF configured by the second TRP for at least one UE accessing or potentially accessing the second TRP. Thus, the same CTDSIF threshold may be configured for at least one UE accessing the serving TRP.

In some embodiments, the first threshold may be configured with respect to one or more second TRPs. Thus, the same CTDSIF threshold may be configured with respect to at least one second TRP.

In some embodiments, with respect to different second TRPs, the first thresholds are different.

In some embodiments, with respect to different UEs, the first threshold may be the same or different.

In some embodiments, with respect to different base stations, the first threshold may be the same or different.

In some embodiments, the first threshold is determined based on at least one of:

a maximum Doppler shift of the UE;
a carrier frequency corresponding to a second TRP;
a first time interval corresponding to the second TRP, wherein the first time interval is an interval between a reporting time of CSI and a time when a PDSCH is transmitted using the CSI;
a second time interval corresponding to the second TRP, wherein the second time interval is determined based on a plurality of first time intervals; or
a load of the network device or a base station.

For example, the maximum Doppler shift of the UE is positively correlated with the first threshold. For example, when the maximum Doppler shift of the UE is relatively large, the first threshold is relatively large; or when the maximum Doppler shift of the UE is relatively small, the first threshold is relatively smaller.

For example, the carrier frequency corresponding to the second TRP is positively correlated with the first threshold. For example, when the carrier frequency corresponding to the second TRP is relatively large, the first threshold is relatively large; and when the carrier frequency corresponding to the second TRP is relatively small, the first threshold is relatively small.

For example, the first time interval is inversely correlated with the first threshold. For example, when the first time interval is relatively large, the first threshold is relatively small; or when the first time interval is relatively small, the first threshold is relatively large.

For example, the second time interval is determined based on a mean value of a plurality of first time intervals. For example, when there are a plurality of first time intervals within a predetermined time, the second time interval may be the mean value of these predetermined time intervals. The second time interval is inversely correlated with the first threshold.

For example, the load of the network device or base station is inversely correlated with the first threshold. For example, when the load of the network device or base station is relatively large, the first threshold is relatively small; or when the load is relatively small, the first threshold is relatively large.

Thus, in the embodiments of the present disclosure, the first threshold may be determined in a plurality of ways, which may be applied to a wider range of application scenarios.

In embodiments of the present disclosure, the UE may determine the first CTDSIF for at least one first TRP and acquire the first threshold for the CTDSIF, and may determine whether to select the first TRP as the third TRP based on the first CTDSIF and the first threshold. This can select an appropriate first TRP as the third TRP for joint transmission with the second TRP in consideration of a time-domain change in an equivalent channel during the coherent joint transmission of a plurality of TRPs, that is, selecting an appropriate candidate TRP as a cooperating TRP for joint transmission with a serving TRP, thereby reducing a case of CSI aging.

It should be noted that those skilled in the art will appreciate that the methods provided in the embodiments of the present disclosure may be executed independently or in conjunction with some methods in the embodiments of the present disclosure or in the related art.

In some embodiments, step S41 of determining the first CTDSIF for at least one first TRP includes: determining the first CTDSIF based on a Doppler-domain bandwidth increasement factor; or determining the first CTDSIF based on a normalized Doppler offset factor.

In some embodiments, the first CTDSIF is determined based on the Doppler-domain bandwidth increasement factor or the normalized Doppler offset factor.

The Doppler-domain bandwidth increasement factor is determined based on a first bandwidth and a second bandwidth, the first bandwidth is determined by a Doppler-domain bandwidth of a composite channel of the first channel and a second channel, the second channel is a channel from a second TRP to the UE, and the second bandwidth is a Doppler-domain bandwidth of the second channel.

The normalized Doppler offset factor is determined based on a first frequency and a second frequency, the first frequency is a maximum Doppler shift, and the second frequency is a power weighting value of a Doppler frequency of the composite channel of the first channel and the second channel.

Optionally, the first CTDSIF is the Doppler-domain bandwidth increasement factor. For example, the UE determines the Doppler-domain bandwidth increasement factor corresponding to the first TRP as the first CTDSIF corresponding to that first TRP.

Optionally, the first CTDSIF is the normalized Doppler offset factor. For example, the UE determines the normalized Doppler offset factor corresponding to the first TRP as the first CTDSIF corresponding to that first TRP.

Optionally, the difference between the first CTDSIF and the Doppler-domain bandwidth increasement factor is within a predetermined range.

Optionally, the difference between the first CTDSIF and the normalized Doppler offset factor is within a predetermined range.

For example, the UE determines a first numerical value based on a difference between the first bandwidth and the second bandwidth, and determines the Doppler-domain bandwidth increasement factor based on a ratio of the first numerical value to the second bandwidth. For example, the first CTDSIF or the Doppler-domain bandwidth increasement factor $\mathrm{DDBIF}_i$ is $\mathrm{DDBIF}_i \triangleq \frac{D_{\mathrm{s,i}}\text{-}\mathrm{D}_S}{D_S} = \frac{D_{\mathrm{s,i}}}{D_S}\text{-}1$ ; wherein $D_{\mathrm{s,i}}$ is the first bandwidth of the candidate TRP or the first TRP (e.g., TRP-i), and $D_S$ is the second bandwidth. Optionally, the first bandwidth may be a distribution range of the Doppler component with relatively large power in the Doppler domain; and the second bandwidth may be a distribution range of a multifrequency component with relatively large power in the Doppler domain. As illustrated in FIG. 5, a second bandwidth $D_s$ and first bandwidths $D_{\mathrm{s},2}$ and $D_{\mathrm{s},3}$ corresponding respectively to the candidate TRPs or first TRPs (e.g., TRP-2 and TRP-3) in a CJT scenario are provided.

For example, the UE determines the normalized Doppler offset factor based on a ratio of an absolute value of the second frequency to the first frequency. For example, the first CTDSIF or normalized Doppler offset factor $\mathrm{NDOF}_i$ is $\mathrm{NDOF}_i \triangleq \frac{|f_{\mathrm{s,i}}|}{f_{\mathrm{max}}}$, wherein $f_{\mathrm{s,i}}$ is the second frequency of the candidate TRP or first TRP (TRP-i), and $f_{\mathrm{max}}$ is the first frequency. The UE may determine the second frequency based on a first component set of the candidate TRP or first TRP (TRP-i), a second component set, and power of the ray of Doppler frequency f. The first component set of the candidate TRP or first TRP (e.g., TRP-i) is the set of Doppler frequency components of the channel from the candidate TRP or first TRP (e.g., TRP-i) to the UE. The second component set includes the set of Doppler frequency components of the channel from the second TRP to the UE. For example, the second frequency $f_{\mathrm{s,i}}$ is $\mathrm{f}_{\mathrm{s,i}} \triangleq \frac{\sum_{\mathrm{f}\in \mathbb{F}_s \bigcup \mathbb{F}_i} \mathrm{f} \cdot \mathrm{P_f}}{\sum_{\mathrm{f}\in \mathbb{F}_s \bigcup \mathbb{F}_i} \mathrm{P_f}}$ , wherein $\mathcal{F}_S$ is

the second component set, $\mathcal{F}_i$ is the first component set of the candidate TRP or first TRP (e.g., TRP-i), and $P_f$ is the power of the ray of Doppler frequency f. The UE may determine the first frequency based on a ratio of the movement velocity to the wavelength. For example, the first frequency $f_{\max}$ is $f_{\max} \triangleq \frac{v}{\lambda}$, where $v$ is the movement velocity, and $\lambda$ is the wavelength. As shown in FIG. 6, the first component sets $\mathcal{F}_2$ and $\mathcal{F}_3$ respectively corresponding to the candidates TRP or first TRPs (e.g., TRP-2 and TRP-3) and the second component set $\mathcal{F}_s$ in a CJT scenario are provided.

In the embodiments of the present disclosure, the first CTDSIF may be determined in a plurality of manners, which may be applied to a wide range of application scenarios. Furthermore, by determining the first CTDSIF using the Doppler-domain bandwidth increasement factor or the normalized Doppler offset factor, the UE may accurately determine the change in the CJT equivalent channel when the first TRP and the second TRP perform joint transmission.

In some embodiments, step S42 of acquiring the first threshold includes: receiving the first threshold sent by a network device.

An embodiment of the present disclosure provides a method for selecting a TRP. The method is performed by a UE, and includes: receiving the first threshold sent by a network device.

In other embodiments, the UE may receive the first threshold sent by another entity.

In some embodiments, receiving the first threshold sent by the network device includes:

receiving a RRC signaling sent by the network device, wherein the RRC signaling carries the first threshold; or
receiving an MAC CE signaling sent by the network device, wherein the MAC CE signaling carries the first threshold.

An embodiment of the present disclosure provides a method for selecting a TRP. The method is performed by a UE, and includes: receiving a RRC signaling sent by the network device, wherein the RRC signaling carries the first threshold; or receiving an MAC CE signaling sent by the network device, wherein the MAC CE signaling carries the first threshold.

In the embodiments of the present disclosure, sending the first threshold via either the RRC signaling or the MAC CE signaling can, on the one hand, provide a plurality of manners for sending the first threshold to apply to a wide range of application scenarios, and on the other hand, reuse the existing signaling to reduce signaling overhead.

It should be noted that those skilled in the art will appreciate that the method provided in the embodiments of the present disclosure may be executed independently or in conjunction with some methods in the embodiments of the present disclosure or the related art.

In some embodiments, determining whether to select the first TRP as the third TRP based on the first CTDSIF and the first threshold includes: determining whether to select the first TRP as the third TRP based on magnitudes of the first threshold and the first CTDSIF.

In some embodiments, determining whether to select the first TRP as the third TRP based on the first CTDSIF and the first threshold includes: determining not to select the first TRP corresponding to the first CTDSIF as the third TRP based on the first CTDSIF being greater than the first threshold; and/or determining to select the first TRP corresponding to the first CTDSIF as the third TRP based on the first CTDSIF being less than or equal to the first threshold.

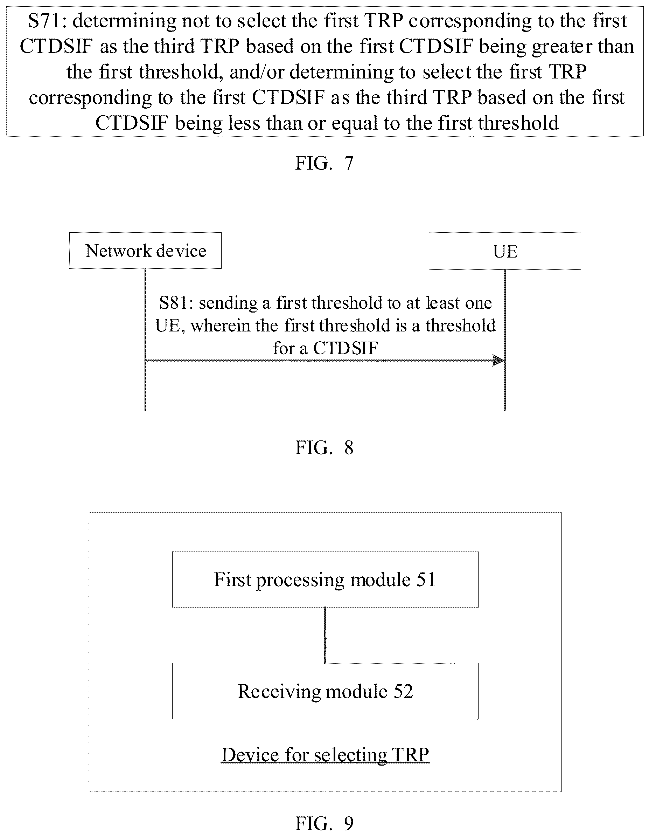

As illustrated in FIG. 7, an embodiment of the present disclosure provides a method for selecting a TRP. The method is performed by a UE, and includes:

step S71, determining not to select the first TRP corresponding to the first CTDSIF as the third TRP based on the first CTDSIF being greater than the first threshold, and/or determining to select the first TRP corresponding to the first CTDSIF as the third TRP based on the first CTDSIF being less than or equal to the first threshold.

In the embodiment, if the first CTDSIF is greater than the first threshold, it is determined that the time-domain change of the CJT equivalent channel during joint transmission of the first TRP corresponding to the first CTDSIF and the second TRP is outside a tolerance range of the network device, thereby determining that the first TRP may not serve as the third TRP (i.e., cooperating TRP) for the second TRP. Alternatively, if the first CTDSIF is less than or equal to the first threshold, it is determined that the time-domain change of the CJT equivalent channel during joint transmission of the first TRP corresponding to the first CTDSIF and the second TRP is within the tolerance range of the network device, thereby determining that the first TRP may serve as one of the third TRPs (i.e., cooperating TRPs) for the second TRP. Thus, a suitable cooperating TRP may be selected for the UE, thereby mitigating the CSI aging issue and significantly enhancing CJT performance.

It should be noted that those skilled in the art will appreciate that the method provided in the embodiments of the present disclosure may be executed independently or in conjunction with some methods in the embodiments of the present disclosure or the related art.

The following method for selecting TRP is performed by a network-side device and is analogous to the above method for selecting TRP performed by the UE. Technical details not disclosed in embodiments of the method for selecting TRP performed by the network-side device may refer to the description of examples of the method for selecting TRP performed by the UE, which are not repeated herein.

As illustrated in FIG. 8, an embodiment of the present disclosure provides a method for selecting a TRP. The method is performed by a network device and includes:

step S81, sending a first threshold to at least one UE, wherein the first threshold is configured to indicate a threshold for a CTDSIF.

In some embodiments, the first threshold and a first CTDSIF determined by the UE are configured for the UE to determine whether to select a first TRP as a third TRP. The first CTDSIF is a CTDSIF of a first channel, and the first channel is a channel from the first TRP to the UE.

In some embodiments of the present disclosure, the UE and the network device may respectively be the UE and the network device described in the above embodiments; the first TRP, the second TRP, and the third TRP may respectively be the first TRP, the second TRP, and the third TRP described in the above embodiments; the first channel and the second channel may respectively be the first channel and the second channel described in the above embodiments; and the first CTDSIF and the first threshold may respectively be the first CTDSIF and the first threshold described in the above embodiments.

For example, the UE is a UE accessing the second TRP and having a coherent joint transmission (CJT) capability.

For example, the network device is a base station.

For example, the first TRP is a candidate TRP, and/or the second TRP is a serving TRP, and/or the third TRP is a cooperating TRP.

For example, the first TRP satisfies at least one of: RSRP of the first TRP being greater than a RSRP threshold; or the first TRP belonging to a same TRP cluster as the second TRP. For example, the network device sends the RSRP threshold to the UE.

For example, the first threshold is determined based on at least one of:

a maximum Doppler shift of the UE;
a carrier frequency corresponding to a second TRP;
a first time interval corresponding to the second TRP, wherein the first time interval is an interval between a reporting time of CSI and a time when a PDSCH is transmitted using the CSI;
a second time interval corresponding to the second TRP, wherein the second time interval is determined based on a plurality of first time intervals; or
a load of the network device or a base station.

For example, the first CTDSIF is determined by the UE based on a Doppler-domain bandwidth increasement factor or a normalized Doppler offset factor.

An embodiment of the present disclosure provides a method for selecting a TRP. The method is performed by the network device, and includes: determining the first threshold for at least one second TRP with respect to the at least one UE.

In some embodiments, sending the first threshold to the at least one UE includes: sending a RRC signaling to the at least one UE, wherein the RRC signaling carries the first threshold; or sending an MAC CE signaling to the at least one UE, wherein the MAC CE signaling carries the first threshold.

An embodiment of the present disclosure provides a method for selecting a TRP. The method is performed by the network device, and includes: sending a RRC signaling to the at least one UE, wherein the RRC signaling carries the first threshold; or sending an MAC CE signaling to the at least one UE, wherein the MAC CE signaling carries the first threshold.

Implementations of the above may specifically refer to the description at the UE side, which are not repeated herein.

It should be noted that those skilled in the art will appreciate that the method provided in the embodiments of the present disclosure may be executed independently or in conjunction with some methods in the embodiments of the present disclosure or the related art.

To further explain any embodiment of the present disclosure, several specific examples are provided below.

Example 1

An embodiment of the present disclosure provides a method for selecting a TRP, which performed by a communication device including a UE and a network device. The method for selecting TRP includes the following steps.

In step S91, a serving TRP configures a CTDSIF threshold value for each potential CJT UE. Optionally, this CTDSIF threshold value is the first threshold in the above embodiments. The serving TRP is the second TRP in the above embodiments.

Optionally, the potential CJT UE accesses the serving TRP, and the network recognizes that the UE has a CJT transmission capability. This potential CJT UE may be the UE in the above embodiments.

Optionally, the CTDSIF threshold value is notified to each potential CJT UE by the base station (gNB) via RRC signaling or MAC CE.

Optionally, the CTDSIF threshold value is determined by the gNB based on at least one of:

a maximum Doppler shift of the channel;
a carrier frequency;
a time interval between reporting CSI and sending PDSCH using that CSI, or a statistical value of that time interval (e.g., a mean value over a period); or
a load of the JNB or the network.

In step S92, each potential CJT UE evaluates each candidate TRP, calculates the CTDSIF value for that candidate TRP, and compares it with the CTDSIF threshold value configured by the network device. Optionally, the potential CJT UE may be the UE in the above embodiments, the candidate TRP may be the first TRP in the above embodiments, and the CTDSIF value for the candidate TRP may be the first CTDSIF in the above embodiments.

Optionally, if the CTDSIF value for the candidate TRP is greater than the CTDSIF threshold value configured by the network device, the candidate TRP is excluded, which means that the candidate TRP may not serve as a cooperating TRP for the CJT UE. Optionally, the cooperating TRP may be the third TRP as described in the above embodiments.

Optionally, if the CTDSIF value for the candidate TRP is not greater than the CTDSIF threshold value configured by the network device, the candidate TRP may be selected as one of the cooperating TRPs for the CJT UE.

Optionally, the candidate TRP may simultaneously satisfy both of the following two conditions.

(1) The RSRP of the candidate TRP exceeds a threshold value, in which this threshold value is configured by the network or preset by a protocol, and this threshold value may correspond to the RSRP threshold described in the above embodiments.

(2) The candidate TRP belongs to the same TRP cluster as the serving TRP of the potential CJT UE, for example, within the network topology, both of the candidate TRP and the serving TRP may belong to the same gNB or be managed by the same central control node.

The CTDSIF value may be, but is not limited to, one of the following two definitions:

(1) Doppler-domain bandwidth increasement factor, in which $\mathrm{DDBIF}_i \triangleq \frac{D_{\mathrm{s,i}}-D_S}{D_S} = \frac{D_{\mathrm{s,i}}}{D_S}-1$ ; where $\mathrm{DDBIF}_i$ is the CTDSIF value or the Doppler-domain bandwidth increasement factor of the candidate TRP (for example, TRP-i), $D_S$ is the bandwidth of the Doppler spectrum corresponding to the channel from the serving TRP to the UE, optionally, $D_S$ may be a distribution range of the Doppler component with relatively large power in the Doppler domain, the value of $D_S$ is as illustrated in FIG. 5, $D_{s,i}$ denotes the bandwidth of the Doppler spectrum of the composite channel formed by the channel from the serving TRP to the UE and the channel from the candidate TRP (e.g., TRP-i) to the UE, optionally $D_{s,i}$ may be a distribution range of the Doppler component with relatively large power in the Doppler domain, and the values of $D_{s,2}$ and $D_{s,3}$ are as illustrated in FIG. 5.

(2) Normalized Doppler offset factor, in which $\mathrm{NDOF}_i \triangleq \frac{|f_{\mathrm{s,i}}|}{f_{\max}}$, where $\mathrm{NDOF}_i$ is the CTDSIF value or normalized Doppler offset factor of the candidate TRP (for example, TRP-i), $\mathrm{f}_{\mathrm{s,i}} \triangleq \frac{\sum_{\mathrm{f}\in \mathcal{F}_S \cup \mathcal{F}_i} \mathrm{f}\cdot \mathrm{P_f}}{\sum_{\mathrm{f}\in \mathcal{F}_S \cup \mathcal{F}_i} \mathrm{P_f}}$, $\mathcal{F}_S$ is a set of Doppler frequency components of the channel from the serving TRP to the UE, the Doppler frequency range included by $\mathcal{F}_S$ is as illustrated in FIG. 6, $\mathcal{F}_i$ is a set of Doppler frequency components of the channel from the candidate TRP (for example, TRP-i) to the UE, the Doppler frequency ranges included by $\mathcal{F}_2$ and $\mathcal{F}_3$ are as illustrated in FIG. 6, $P_f$ is the power of the ray corresponding to the Doppler frequency f, and $f_{\max} \triangleq \frac{v}{\lambda}$ which is the maximum Doppler shift.

Implementations of the above may specifically refer to the descriptions at the network device side and/or the UE side, which are not repeated here.

It should be noted that those skilled in the art will appreciate that the method provided in the embodiments of the present disclosure may be executed independently or in conjunction with some methods in the embodiments of the present disclosure or the related art.

Example 2

An embodiment of the present disclosure provides a communication system including a UE and a network device.

The network device is configured to send a first threshold to at least one UE. The first threshold is configured to indicate a threshold for a second channel time-domain selectivity increasement factor (CTDSIF),

The UE is configured to determine a first CTDSIF for at least one first TRP. The first CTDSIF is a CTDSIF of a first channel, and the first channel is a channel from the first TRP to the UE, and

The UE is further configured to determine whether to select the first TRP as a third TRP based on the first CTDSIF and the first threshold.

In some embodiments, the network device is configured to determine the first threshold based on at least one of: a maximum Doppler shift of the first channel, a carrier frequency corresponding to a second TRP, a first time interval corresponding to the second TRP, a second time interval corresponding to the second TRP, or a load of the network device or a base station.

In some embodiments, the UE is configured to determine that the first TRP satisfies at least one of RSRP of the first TRP being greater than a RSRP threshold or the first TRP belonging to a same TRP cluster as the second TRP.

In some embodiments, the UE is configured to determine the first CTDSIF based on a Doppler-domain bandwidth increasement factor or a normalized Doppler offset factor.

Implementations of the above may specifically refer to the descriptions at the network device side and/or the UE side, which are not repeated here.

It should be noted that those skilled in the art will appreciate that the method provided in the embodiments of the present disclosure may be executed independently or in conjunction with some methods in the embodiments of the present disclosure or the related art.

As illustrated in FIG. 9, an embodiment of the present disclosure provides a device for selecting a TRP. The device is configured within a UE, and includes:

a first processing module 51, configured to determine a first CTDSIF for at least on first TRP, wherein the first CTDSIF is a CTDSIF of a first channel, and the first channel is a channel from a first TRP to the UE; and
a receiving module 52, configured to acquire a first threshold, wherein the first threshold is configured to indicate a threshold for a CTDSIF,
the first processing module 51 is configured to determine whether to select the first TRP as a third TRP based on the first CTDSIF and the first threshold.

An embodiment of the present disclosure provides a device for selecting a TRP. The device is configured within the UE, and includes the first processing module 51 configured to determine not to select the first TRP corresponding to the first CTDSIF as the third TRP based on the first CTDSIF being greater than the first threshold.

An embodiment of the present disclosure provides a device for selecting a TRP. The device is configured within the UE, and includes the first processing module 51 configured to determine to select the first TRP corresponding to the first CTDSIF as the third TRP based on the first CTDSIF being less than or equal to the first threshold.

An embodiment of the present disclosure provides a device for selecting a TRP. The device is configured within the UE, and includes the receiving module 52 configured to receive the first threshold sent by a network device.

An embodiment of the present disclosure provides a device for selecting a TRP. The device is configured within the UE, and includes the receiving module 52 configured to receive a RRC signaling sent by the network device, wherein the RRC signaling carries the first threshold.

An embodiment of the present disclosure provides a device for selecting a TRP. The device is configured within the UE, and includes the receiving module 52 configured to receive an MAC CE signaling sent by the network device, wherein the MAC CE signaling carries the first threshold.

In some embodiments, the first threshold is determined based on at least one of:

a maximum Doppler shift of the UE;
a carrier frequency corresponding to a second TRP;
a first time interval corresponding to the second TRP, wherein the first time interval is an interval between a reporting time of CSI and a time when a PDSCH is transmitted using the CSI;
a second time interval corresponding to the second TRP, wherein the second time interval is determined based on a plurality of first time intervals; or
a load of the network device or a base station.

In some embodiments, the first CTDSIF is determined based on a Doppler-domain bandwidth increasement factor or a normalized Doppler offset factor.

The Doppler-domain bandwidth increasement factor is determined based on a first bandwidth and a second bandwidth, the first bandwidth is determined by a Doppler-domain bandwidth of a composite channel of the first channel and a second channel, the second channel is a channel from a second TRP to the UE, and the second bandwidth is a Doppler-domain bandwidth of the second channel.

The normalized Doppler offset factor is determined based on a first frequency and a second frequency, the first frequency is a maximum Doppler shift, and the second frequency is a power weighting value of a Doppler frequency of the composite channel of the first channel and the second channel.

In some embodiments, the Doppler-domain bandwidth increasement factor is a ratio of a first numerical value to the second bandwidth, and the first numerical value is a difference between the first bandwidth and the second bandwidth.

In some embodiments, the normalized Doppler offset factor is a ratio of an absolute value of the second frequency to the first frequency.

In some embodiments, the first TRP satisfies at least one of:

RSRP of the first TRP being greater than a RSRP threshold; or
the first TRP belonging to a same TRP cluster as the second TRP.

In some embodiments, the RSRP threshold is configured by a network device, or is specified by a protocol.

In some embodiments, the UE is a UE accessing the second TRP, and having a coherent joint transmission (CJT) capability.

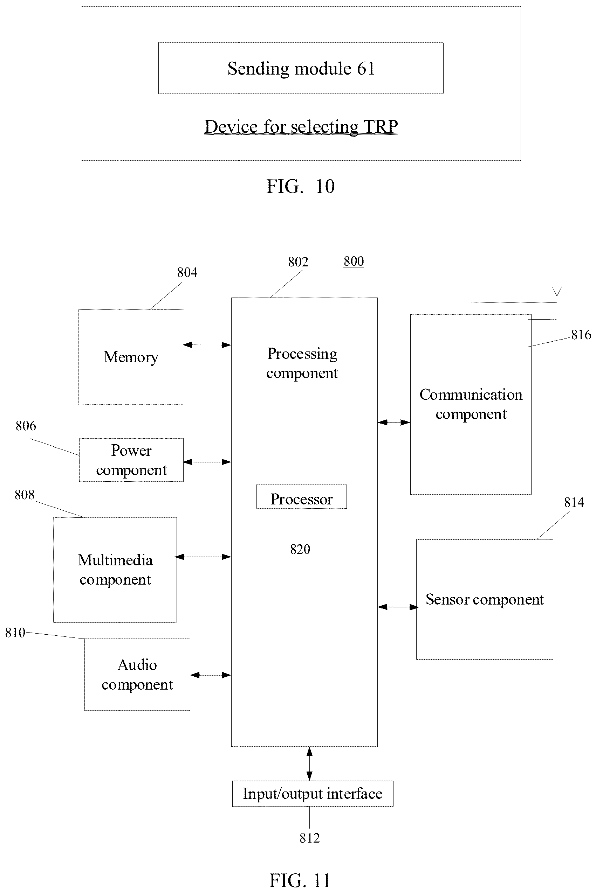

As illustrated in FIG. 10, an embodiment of the present disclosure provides a device for selecting a TRP. The device is configured within a network device, and includes:

a sending module 61, configured to send a first threshold to at least one UE, wherein the first threshold is a threshold for a CTDSIF.

An embodiment of the present disclosure provides a device for selecting a TRP. The device is configured within the network device, and includes a second processing module configured to determine the first threshold for at least one second TRP with respect to the at least one UE.

An embodiment of the present disclosure provides a device for selecting a TRP. The device is configured within the network device, and includes the sending module 61 configured to send an RRC signaling to the at least one UE, wherein the RRC signaling carries the first threshold.

An embodiment of the present disclosure provides a device for selecting a TRP. The device is configured within the network device, and includes the sending module 61 configured to send an MAC CE signaling to the at least one UE, wherein the MAC CE signaling carries the first threshold.

In some embodiments, the first threshold is determined based on at least one of:

a maximum Doppler shift of the UE, the first channel being a channel from the second TRP to the UE;
a carrier frequency corresponding to a second TRP;
a first time interval corresponding to the second TRP, wherein the first time interval is an interval between a reporting time of CSI and a time when a PDSCH is transmitted using the CSI;
a second time interval corresponding to the second TRP, wherein the second time interval is determined based on a plurality of first time intervals; or
a load of the network device or a base station.

In some embodiments, the UE is a UE accessing the second TRP, and having a coherent joint transmission (CJT) capability.

It should be noted that those skilled in the art will appreciate that the device provided in the embodiments of the present disclosure may be executed independently or in conjunction with some devices in the embodiments of the present disclosure or in the related art.

Regarding the device in the above embodiments, the specific manner in which each module performs operations has been described in detail in the embodiments relating to the method, which will not be repeated herein.

An embodiment of the present disclosure provides a communication device including a processor, a transceiver, a memory, and an executable program stored on the memory and capable of being executed by the processor, wherein the processor executes the above method for selecting TRP when running the executable program.

In some embodiments, the processor may include various types of storage media, which are non-transitory computer storage media capable of retaining information stored thereon after the communication device is powered down.

In some embodiments, the communication device includes a UE and a network device.

The processor may be connected to the memory via a bus or similar means for reading the executable program stored thereon, such as at least one of the methods illustrated in FIGs. 4 and 7 to 8.

An embodiment of the present disclosure provides a computer storage medium storing an executable program that, when executed by a processor, can implement the above method for selecting TRP, for example, at least one of the methods illustrated in FIGs. 4 and 7 to 8.

FIG. 11 is a block diagram of a UE 800 according to an exemplary embodiment. For example, the UE 800 may be a mobile phone, a computer, a digital broadcasting device, a messaging device, a game console, a tablet device, a medical device, a fitness device, a personal digital assistant, or the like.

Referring to FIG. 11, the UE 800 may include one or more of a processing component 802, a memory 804, a power component 806, a multimedia component 808, an audio component 810, an input/output (I/O) interface 812, a sensor component 814, and a communication component 816.

The processing component 802 generally controls the overall operations of the UE 800, such as operations associated with display, telephone calls, data communications, camera operations, and recording operations. The processing component 802 may include one or more processors 820 to execute instructions to complete all or part of the steps of the foregoing method. In addition, the processing component 802 may include one or more modules to facilitate interaction between the processing component 802 and other components. For example, the processing component 802 may include a multimedia module to facilitate the interaction between the multimedia component 808 and the processing component 802.

The memory 804 is configured to store various types of data to support the operation of the UE 800. Examples of these data include instructions for any application or method operating on the UE 800, contact data, phone book data, messages, pictures, videos and the like. The memory 804 may be implemented by any type of volatile or non-volatile storage device or a combination thereof, such as static random access memory (SRAM), electrically erasable programmable read-only memory (EEPROM), erasable and programmable read-only memory (EPROM), programmable read-only memory (PROM), read-only memory (ROM), magnetic memory, flash memory, magnetic disk or optical disk.

The power component 806 provides power to various components of the UE 800. The power component 806 may include a power management system, one or more power supplies, and other components associated with generating, managing, and distributing power for the UE 800.

The multimedia component 808 includes a screen that provides an output interface between the UE 800 and the user. In some embodiments, the screen may include a liquid crystal display (LCD) and a touch panel (TP). If the screen includes a touch panel, the screen may be implemented as a touch screen to receive input signals from the user. The touch panel includes one or more touch sensors to sense touch, sliding, and gestures on the touch panel. The touch sensor may not only sense the boundary of the touch or slide action, but also detect the duration and pressure related to the touch or slide operation. In some embodiments, the multimedia component 808 includes a front camera and/or a rear camera. When the UE 800 is in an operation mode, such as a shooting mode or a video mode, the front camera and/or the rear camera can receive external multimedia data. Each of the front camera and rear camera may be a fixed optical lens system or have focal length and optical zoom capabilities.

The audio component 810 is configured to output and/or be input audio signals. For example, the audio component 810 includes a microphone (MIC), and when the UE 800 is in an operation mode, such as a call mode, a recording mode, and a voice recognition mode, the microphone is configured to receive an external audio signal. The received audio signal can be further stored in the memory 804 or sent via the communication component 816. In some embodiments, the audio component 810 further includes a speaker for outputting audio signals.

The I/O interface 812 provides an interface between the processing component 802 and a peripheral interface module. The above-mentioned peripheral interface module may be a keyboard, a click wheel, a button, and the like. These buttons may include but are not limited to home button, volume button, start button, and lock button.

The sensor component 814 includes one or more sensors for providing the UE 800 with various aspects of state evaluation. For example, the sensor component 814 can detect the on/off status of the UE 800 and the relative positioning of components. For example, the component is a display and keypad of the UE 800. The sensor component 814 can also detect the position change of the UE 800 or a component of the UE 800, the presence or absence of contact between the user and the UE 800, the orientation or acceleration/deceleration of the UE 800, and the temperature change of the UE 800. The sensor component 814 may include a proximity sensor configured to detect the presence of nearby objects when there is no physical contact. The sensor component 814 may also include a light sensor, such as a CMOS or CCD image sensor, for use in imaging applications. In some embodiments, the sensor component 814 may also include an acceleration sensor, a gyroscope sensor, a magnetic sensor, a pressure sensor, or a temperature sensor.

The communication component 816 is configured to facilitate wired or wireless communication between the UE 800 and other devices. The UE 800 can access a wireless network based on a communication standard, such as WiFi, 2G, or 3G, or a combination thereof. In an exemplary embodiment, the communication component 816 receives a broadcast signal or broadcast related information from an external broadcast management system via a broadcast channel. In an exemplary embodiment, the communication component 816 further includes a near field communication (NFC) module to facilitate short-range communication. For example, the NFC module can be implemented based on radio frequency identification (RFID) technology, infrared data association (IrDA) technology, ultra-wideband (UWB) technology, Bluetooth (BT) technology and other technologies.

In an exemplary embodiment, the UE 800 may be implemented by one or more of application specific integrated circuit (ASIC), digital signal processor (DSP), digital signal processing device (DSPD), programmable logic devices (PLD), field programmable gate array (FPGA), controller, microcontroller, microprocessor, or other electronic components, to perform the above-mentioned methods.

An exemplary embodiment also provides a non-transitory computer-readable storage medium including instructions, such as the memory 804 including instructions, and the instructions may be executed by the processor 820 of the UE 800 to complete the foregoing method. For example, the non-transitory computer-readable storage medium may be ROM, random access memory (RAM), CD-ROM, magnetic tape, floppy disk, optical data storage device and the like.

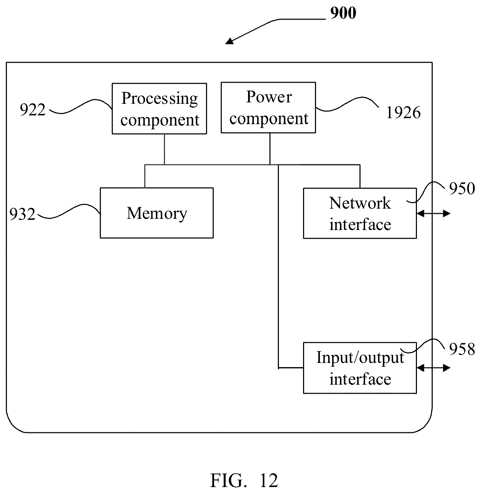

As shown in FIG. 12, an embodiment of the present disclosure illustrates a structure of a communication device. For example, the communication device 900 may be provided as a network-side device. The communication device may be the above first network element, second network element, third network element, and/or first entity. Optionally, the first network element is an NEF. Optionally, the second network element is a UDM. Optionally, the third network element is a UDR. Optionally, the first entity is an AF.

Referring to FIG. 12, the communication device 900 includes a processing component 922 which further includes one or more processors, and a memory resource which is represented by a memory 932 and is configured for storing instructions such as application programs executable by the processing component 922. The application program stored in the memory 932 may include one or more modules each corresponding to a set of instructions. Furthermore, the processing component 922 is configured to execute instructions to perform the method applied to the access device among the above methods.

The communication device 900 may also include a power component 926 configured to perform power management of the communication device 900, a wired or wireless network interface 950 configured to connect the communication device 900 to a network, and an input/output (I/O) interface 958. The communication device 900 may operate based on an operating system stored in memory 932, such as Windows Server™, Mac OS X™, Unix™, Linux™, Free BSD™ or the like.

If there is no contradiction, each step within an implementation or embodiment may be implemented as an independent embodiment, and various steps may be arbitrarily combined. For example, a scheme with a certain step removed in an implementation or embodiment may also be implemented as an independent embodiment, various steps in an implementation or embodiment may be arbitrarily interchanged in sequence, and optional manners or examples in an implementation or embodiment may be arbitrarily combined. Moreover, various implementations or embodiments may be arbitrarily combined, for example, partial or all steps in different implementations or embodiments may be arbitrarily combined, and an implementation or embodiment may be arbitrarily combined with an optional manner or optional example in another implementation or embodiment.

A person skilled in the art may easily conceive of other embodiments of the present disclosure upon consideration of the specification and practice of the disclosure disclosed herein. The present disclosure is intended to cover any variations, uses, or adaptations of the present disclosure that follow the general principles of the present disclosure and include the common general knowledge or conventional technical means in the technical field not disclosed by the present disclosure. The specification and embodiments are to be regarded as exemplary only, and the true scope and spirit of the present disclosure are indicated by the following claims.

It is to be understood that the present disclosure is not limited to the precise structures described above and illustrated in the accompanying drawings, and that various modifications and changes may be made without departing from the scope thereof. The scope of the present disclosure is limited only by the appended claims.

## Claims

**1.** A method for selecting a transmission reception point, TRP, performed by a user equipment, UE, comprising:

determining a first channel time-domain selectivity increasement factor, CTDSIF, for at least one first TRP, wherein the first CTDSIF is a CTDSIF of a first channel, and the first channel is a channel from the first TRP to the UE;
acquiring a first threshold, wherein the first threshold is configured to indicate a threshold for a CTDSIF; and
determining whether to select the first TRP as a third TRP based on the first CTDSIF and the first threshold.

**2.** The method according to claim 1, wherein determining whether to select the first TRP as the third TRP based on the first CTDSIF and the first threshold comprises at least one of:

determining not to select the first TRP corresponding to the first CTDSIF as the third TRP based on the first CTDSIF being greater than the first threshold; or
determining to select the first TRP corresponding to the first CTDSIF as the third TRP based on the first CTDSIF being less than or equal to the first threshold.

**3.** The method according to claim 1 or 2, wherein acquiring the first threshold comprises:

receiving the first threshold sent by a network device; or
acquiring the first threshold specified by a protocol.

**4.** The method according to claim 3, wherein receiving the first threshold sent by the network device comprises:

receiving a radio resource control, RRC, signaling sent by the network device, wherein the RRC signaling carries the first threshold; or
receiving a media access control control element, MAC CE, signaling sent by the network device, wherein the MAC CE signaling carries the first threshold.

**5.** The method according to any one of claims 1 to 4, wherein the first threshold is determined based on at least one of:

a maximum Doppler shift of the UE;
a carrier frequency corresponding to a second TRP;
a first time interval corresponding to the second TRP, wherein the first time interval is an interval between a reporting time of channel state information, CSI, and a time when a PDSCH is transmitted using the CSI;
a second time interval corresponding to the second TRP, wherein the second time interval is determined based on a plurality of first time intervals; or
a load of the network device or a base station.

**6.** The method according to any one of claims 1 to 5, wherein the first CTDSIF is determined based on a Doppler-domain bandwidth increasement factor or a normalized Doppler offset factor;

wherein the Doppler-domain bandwidth increasement factor is determined based on a first bandwidth and a second bandwidth, the first bandwidth is determined by a Doppler-domain bandwidth of a composite channel of the first channel and a second channel, the second channel is a channel from a second TRP to the UE, and the second bandwidth is a Doppler-domain bandwidth of the second channel; and
the normalized Doppler offset factor is determined based on a first frequency and a second frequency, the first frequency is a maximum Doppler shift, and the second frequency is a power weighting value of a Doppler frequency of the composite channel of the first channel and the second channel.

**7.** The method according to claim 6, wherein the Doppler-domain bandwidth increasement factor is a ratio of a first numerical value to the second bandwidth, and the first numerical value is a difference between the first bandwidth and the second bandwidth.

**8.** The method according to claim 6, wherein the normalized Doppler offset factor is a ratio of an absolute value of the second frequency to the first frequency.

**9.** The method according to any one of claims 1 to 8, wherein the first TRP satisfies at least one of:

reference signal received power, RSRP, of the first TRP being greater than a RSRP threshold; or
the first TRP belonging to a same TRP cluster as the second TRP.

**10.** The method according to claim 9, wherein the RSRP threshold is configured by a network device, or is specified by a protocol.

**11.** The method according to any one of claims 1 to 10, wherein the UE is a UE accessing the second TRP, and having a coherent joint transmission, CJT, capability.

**12.** A method for selecting a transmission reception point, TRP, performed by a network device, comprising:
sending a first threshold to at least one user equipment, UE, wherein the first threshold is a threshold for a second channel time-domain selectivity increasement factor, CTDSIF.

**13.** The method according to claim 12, further comprising:
determining the first threshold for at least one second TRP with respect to the at least one UE.

**14.** The method according to claim 12 or 13, wherein sending the first threshold to the at least one UE comprises:

sending a radio resource control, RRC, signaling to the at least one UE, wherein the RRC signaling carries the first threshold; or
sending a media access control control element, MAC CE, signaling to the at least one UE, wherein the MAC CE signaling carries the first threshold.

**15.** The method according to any one of claims 12 to 14, wherein the first threshold is determined based on at least one of:

a maximum Doppler shift of the UE;
a carrier frequency corresponding to a second TRP;
a first time interval corresponding to the second TRP, wherein the first time interval is an interval between a reporting time of channel state information, CSI, and a time when a PDSCH is transmitted using the CSI;
a second time interval corresponding to the second TRP, wherein the second time interval is determined based on a plurality of first time intervals; or
a load of the network device or a base station.

**16.** The method according to any one of claims 13 to 15, wherein the UE is a UE accessing the second TRP, and having a coherent joint transmission, CJT, capability.

**17.** A device for selecting a transmission reception point, TRP, configured in a user equipment, UE, comprising:

a first processing module, configured to determine at least one first channel time-domain selectivity increasement factor, CTDSIF, wherein the first CTDSIF is a CTDSIF of a first channel, and the first channel is a channel from a first TRP to the UE; and
a receiving module, configured to acquire a first threshold, wherein the first threshold is configured to indicate a threshold for a CTDSIF,
the first processing module is configured to determine whether to select the first TRP as a third TRP based on the first CTDSIF and the first threshold.

**18.** A device for selecting a transmission reception point, TRP, configured in a network device, comprising:
a sending module, configured to send a first threshold to at least one user equipment, UE, wherein the first threshold is a threshold for a second channel time-domain selectivity increasement factor, CTDSIF.

**19.** A communication system comprising a user equipment, UE, and a network device,

wherein
the network device is configured to send a first threshold to at least one UE, wherein the first threshold is configured to indicate a threshold for a channel time-domain selectivity increasement factor, CTDSIF,
the UE is configured to determine a first CTDSIF for at least one first TRP, wherein the first CTDSIF is a CTDSIF of a first channel, and the first channel is a channel from the first TRP to the UE, and
the UE is further configured to determine whether to select the first TRP as a third TRP based on the first CTDSIF and the first threshold.

**20.** A communication device comprising a processor; a transceiver; a memory; and an executable program stored on the memory and capable of being executed by the processor, wherein the processor, when executing the executable program, performs the method for selecting a transmission reception point, TRP, according to any one of claims 1 to 11 or 12 to 16.

**21.** A computer storage medium having a computer-executable program stored thereon that, when executed by a processor, can implement the method for selecting a transmission reception point, TRP, according to any one of claims 1 to 11 or 12 to 16.

13
12
12
12
11
11
11
11

FIG. 1

TRP-1
$H_1$
TRP-2
$H_2$
V
$H_3$
TRP-3

FIG. 2

TRP-1
(Serving)
TRP-3
TRP-2
TRP:1+3
TRP:1+2
f（Doppler）

FIG. 3

S41: determining a first CTDSIF for at least one first TRP, wherein the first CTDSIF is a CTDSIF of a first channel, and the first channel is a channel from the first TRP to the UE

↓

S42: acquiring a first threshold, wherein the first threshold is configured to indicate a threshold for a CTDSIF

↓

S43: determining whether to select the first TRP as a third TRP based on the first CTDSIF and the first threshold

FIG. 4

TRP-1
(Serving)
TRP-2
TRP-3
$D_s$
f（Doppler）
$D_{s,3}$
$D_{s,2}$

FIG. 5

TRP-1
(Serving)
TRP-2
TRP-3
$F_s$
$F_2$
f（Doppler）
$F_3$

FIG. 6

S71: determining not to select the first TRP corresponding to the first CTDSIF as the third TRP based on the first CTDSIF being greater than the first threshold, and/or determining to select the first TRP corresponding to the first CTDSIF as the third TRP based on the first CTDSIF being less than or equal to the first threshold

FIG. 7

Network device
UE
S81: sending a first threshold to at least one UE, wherein the first threshold is a threshold for a CTDSIF

FIG. 8

First processing module 51
Receiving module 52
Device for selecting TRP

FIG. 9

Sending module 61
Device for selecting TRP

FIG. 10

800
802
804
Memory
Processing component
806
Power component
808
Multimedia component
810
Audio component
Processor
820
816
Communication component
814
Sensor component
Input/output interface
812

FIG. 11

900
922
Processing component
Power component
1926
932
Memory
Network interface
950
Input/output interface
958

FIG. 12

**INTERNATIONAL SEARCH REPORT**

International application No. **PCT/CN2023/092622**

**A. CLASSIFICATION OF SUBJECT MATTER**

H04W 72/231(2023.01)i

According to International Patent Classification (IPC) or to both national classification and IPC

**B. FIELDS SEARCHED**

Minimum documentation searched (classification system followed by classification symbols)

IPC: H04W H04L

Documentation searched other than minimum documentation to the extent that such documents are included in the fields searched

Electronic data base consulted during the international search (name of data base and, where practicable, search terms used)

WPABSC; CNTXT; WOTXT; EPTXT; USTXT; 3GPP: 门限, 阈值, 候选, 信道, TRP, CTDSIF, threshold, candidate, channel

**C. DOCUMENTS CONSIDERED TO BE RELEVANT**

| Category* | Citation of document, with indication, where appropriate, of the relevant passages | Relevant to claim No. |
|---|---|---|
| A | CN 115053473 A (BEIJING XIAOMI MOBILE SOFTWARE CO., LTD.) 13 September 2022 (2022-09-13) claims 1-34 | 1-21 |
| A | CN 114342496 A (GUANGDONG OPPO MOBILE COMMUNICATIONS CO., LTD.) 12 April 2022 (2022-04-12) entire document | 1-21 |
| A | CN 115190497 A (HUAWEI TECHNOLOGIES CO., LTD.) 14 October 2022 (2022-10-14) entire document | 1-21 |

☐ Further documents are listed in the continuation of Box C.

☑ See patent family annex.

* Special categories of cited documents:

- "A" document defining the general state of the art which is not considered to be of particular relevance
- "D" document cited by the applicant in the international application
- "E" earlier application or patent but published on or after the international filing date
- "L" document which may throw doubts on priority claim(s) or which is cited to establish the publication date of another citation or other special reason (as specified)
- "O" document referring to an oral disclosure, use, exhibition or other means
- "P" document published prior to the international filing date but later than the priority date claimed
- "T" later document published after the international filing date or priority date and not in conflict with the application but cited to understand the principle or theory underlying the invention
- "X" document of particular relevance; the claimed invention cannot be considered novel or cannot be considered to involve an inventive step when the document is taken alone
- "Y" document of particular relevance; the claimed invention cannot be considered to involve an inventive step when the document is combined with one or more other such documents, such combination being obvious to a person skilled in the art
- "&" document member of the same patent family

| Date of the actual completion of the international search | Date of mailing of the international search report |
|---|---|
| **14 December 2023** | **15 December 2023** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | Telephone No. |

Form PCT/ISA/210 (second sheet) (July 2022)

**INTERNATIONAL SEARCH REPORT**
**Information on patent family members**

International application No.
**PCT/CN2023/092622**

| Patent document cited in search report | | | Publication date (day/month/year) | Patent family member(s) | Publication date (day/month/year) |
|---|---|---|---|---|---|
| CN | 115053473 | A | 13 September 2022 | None | |
| CN | 114342496 | A | 12 April 2022 | None | |
| CN | 115190497 | A | 14 October 2022 | None | |

Form PCT/ISA/210 (patent family annex) (July 2022)